# EUROPEAN PATENT SPECIFICATION

(11) **EP 0 902 908 B1**
(45) Date of publication and mention of the grant of the patent: **19.12.2001**
(21) Application number: 97922030.8
(22) Date of filing: 13.05.1997
(51) Int. Cl.: G02C 5/22

(54) **Earpiece with reduced elastic hinging device**
Brillenbügel mit reduziertem Federscharnier
Branche de lunette comportant une charnière élastique réduite

(30) Priority: 31.05.1996 IT TV960070
(43) Date of publication of application: 24.03.1999
(73) Proprietor: Montagner, Luciano, 31040 Segusino (IT)
(72) Inventor: Montagner, Luciano, 31040 Segusino (IT)
(74) Representative: D'Agostini, Giovanni, Dr.
(86) International application number: PCT/IT97/00108
(87) International publication number: WO 97/45764

(56) References cited:
- EP-A- 0 239 011
- EP-A- 0 462 936
- DE-A- 2 948 113
- FR-A- 2 097 211
- FR-A- 2 702 572

## Description

This invention has for object the improvement of a bi-elastic device, particularly reduced, for the elasticizing of an ear-piece for spectacles. The innovation finds particular even if not exclusive application in the field of the spectacles production and of the metal small parts, not excluding their fittings.

It is known that many frames for spectacles are found in prior art. Some of these, provide some devices, made close to the hinging, for allowing the elastic fastening to that part of the frame which is known as front face. Such function, obtained on both sides of the spectacles, on one hand has the advantage of giving a better fitting, because if the ear-pieces exert a lower pressure on the temples, they are more easily endurable by most people, on the other hand they would result more adaptable to the different anatomical shapes of each subject. The firms of the field therefore, are since a long time thus oriented, with the main purpose of finding innovative and often improving solutions, both with regard to the functioning and mainly to the size, when compared to the pre-existing ones.

For example, a traditional elasticized ear-piece, that found a wide consent among the consumers, consists of the European patent application n.79400087.7, in which was described an elastic hinge for spectacles frame, essentially made up of a box, associated sideways to the ear-piece, for containing a tie-rod means coaxial to said box, and in which the end portion of the tie-rod is threaded, on which is screwed a bushing that ensures the positioning of a spring, while on the other side it is in abutment on the inside of a seat obtained in said box.

Again a system, conceptually based on the solution provided by the previous patent, may consist of the utility model n.181221, having for object an improved hinge for the articulation to a spectacles frame of an elastically openable ear-piece, in which it is provided a squared support inserted in the frame, on which it is inserted a support which is also squared that makes up a shoulder for the compression of a spring.

Finally, the Italian Patent n. 1 147 198, has for object an ear-piece for spectacles with elastic hinging, in which the end of the ear-piece involves an axially holed small block within which is inserted one end for the connection of the hinge. Continuing with a reduced diameter, it supports inserted a sharp edge that is fixed inside the borehole while on the back of this latter is provided a tension helicoidal spring blocked at the end of the element by a threaded locknut. In such case it is possible the elastic opening of the ear-piece according to a certain angle by means of elastic yielding of the hinge-like connection.

The drawbacks noticed, in general common in the mentioned solutions, consist essentially of the excessive complexity of the utilized devices, which involved also a total oversizing of the device. Furthermore, notwithstanding they perform their functions perfectly, they determine many problems during the manufacturing phases, on one side for what concerns the realization of the many precision components, on the other during their assembling, at the end influencing in considerable measure times and costs. Main purpose of the present firms of the field, has been therefore the obtainment of the elasticizing devices of the ear-piece, that, even being more restrained in their size, offer a good functionality aiming at the same time to reducing the components, facilitating the assembling and diminishing the costs.

In the panorama of the recent devices, in line with the above mentioned principles, and that are more or less effectively proposed on the market, there is a solution in which the articulation is all one with the sliding body for the containing of an elasticizing spring of the ear-piece. In more detail said body, has a square cross section, in which longitudinally has been removed some material from one part to the other, up to obtain opposite thin sheets which define the guide seat, making up the containing walls of a spring. On one side, the spring is placed in abutment on said seat, while on the other, it is fastened to a tooth which protrudes respect to the profile defined by the sliding body. Of the device considered, is part also a half-hull, opened on one side to be then associated to an ear-piece, and on the inside of which is inserted the sliding body complete of the spring, turning the tooth on the longitudinal surface in which is obtained a stop reference. Being in a traction condition, the articulation obliges the body to slide on the inside of the half-hull maintaining the tooth constantly gripping along the base of said half-hull, up to compress the spring, therefore recalling elastically the articulation itself.

It is also very common the condition of fastening to said box preassembled on the end of the ear-piece, the elastic yielding group, essentially consisting of an articulation on which is screwed a tie-rod coaxial to a spring, fastened on the opposite side by a suitable bushing.

As a consequence, it is possible to notice at least two drawbacks, on one side, the need for an adequate size, which influences the weight of the structure, aesthetics not excluded, on the other, the use of screw means involves considerable assembling times, and therefore also considerable costs. For some ear-pieces, considered valuable, the system is still valid, as seen by their wide use, but for the others, directed to a wider public, the device would not be anymore convenient, because it should suit costs of the frame definitely more contained. The continuous research in the field, in recent times, was therefore directed towards alternative devices, designed for being promoted in a great amount and mainly able to obviate the use of the spring passing the box for the fastening of the elastic yielding group.

It is known also the French Patent n. 2 517 080. More in detail is again described a hinge for spectacles frame, in which the metal core is all one with the articulation hinged to the front face. More in detail, the core is placed, passing from one side to the other, coaxial to a box, which near to one end provides an housing able to contain an helicoidal compression spring. This latter, on one side is positioned in abutment on the annular edge obtained through a working internal to said box, on the other side is being positioned on the end partially inserted inside the box and which covers the end of said core. The effect obtained by opening the era-piece, consists in visualizing the coaxial sliding of the end with respect to the box containing the device. The drawbacks of this latter solution consist of the fact that are still required some complex components, which would make particularly difficult the manufacturing and assembling, not excluded some manufacturing costs which would affect considerably the finished product.

Always in prior art, are known other improved elastic yielding devices, which derive more or less from the previously described solutions, and in which are anyway observable some problems related to the large size of the articulation.

The fact of being particularly bulky, with regard to the elasticizing device, on one hand is unpleasant to see, on the other it is with no doubt limiting, because the ear-piece shape conditions its application. Other negative aspects, commonly noticeable in the mentioned solutions, regard the fact that it is no possible to combine the already finished device directly with the ear-piece, thus involving rather long assembling times. Finally, the traditional ear-pieces have a tie-rod which, because of its shape, allows an excessive slack, being inclined to a torsion, not much liked by the consumer. Purpose of this invention is to obviate the mentioned drawbacks.

Similar elastic hinging solutions are disclosed in DE2948113A (double spring box solution); FR2097211A (spring box solution), EP0462936A (double spring box solution); EP0239011A (spring box solution);

FR-A-2702573 discloses a resilient hinge for a spectacle frame comprising a box (12) housing a spring (40) in abutment on the box (12) on the hinge side; the other end of the spring being in the toothed-end (31) of a L-shaped hinge element (30) inserted in said box. This solution requires a complicated mechanism consisting in:
- using an axial guide means (42) for said spring (40);
- said axial guide means having a pyramidal square-head (44-45,46), abutting against a V-shaped anvil (50-58) with a tooth (52-54) that engages with a notch (14) realized in the box (12-18) that include the respective spring (40).

A proposal of the same applicant consisted of a device, particularly reduced, for the elasticizing of an ear-piece for spectacles, essentially comprising a small box, combined as finished with the ear-piece by spot-welding and pre-assembled, in whose inside are housed two springs, said springs, on one side being with their end in abutment on the bottom of the small box, on the other side being placed in abutment of the end of a tie-rod, with respect to which they are placed one for each side; and in which the shape of the tie-rod is substantially "T" like having the opposite end, provided with a suitable hole, hingeable to a corresponding small front face provided on the frame of the spectacles. Another purpose of this invention is that of improving this solution in combination with the teaching of FR-A-2702573 but in which the feature of the mechanism is less complicated and is less expensive.

This and other purposes are reached with the present invention according to the characteristics stated in claim 1 by an ear-piece with elastic hinging device, for spectacles, comprising a box, inside of which at least two springs are housed, said spring means on the hinging side being retained by said box, and on the opposite side being abutted against a "L" shaped toothed-end of a tie-rod hinging means characterized in that:
- said small box is welded with the ear-piece in order to realize a full operative pre-assembly box with said ear-piece, inside of which:

- the respective "L" shaped toothed-end of said tie-rod hinging means, is placed with its opening against said ear-piece surface, in order that said springs are encased and guided inside said "L" shaped toothed-end tie-rod hinging means and said surface of said ear-piece;
- said box, in the hinging side wall comprises a guide seat, and at both sides thereof abutment faces, each being arranged for abutment of a respective one of said springs to guide and allow sliding, between them, a hinging means extension of said tie-rod hinging means.

In such way, through a considerable creative contribution whose effect represents an immediate technical progress, are obtained many advantages. First of all it is obtained a substantial reduction of the size, mainly of the length, that besides being a considerable aesthetic advantage, allows the widening of the range of the tie-rods on which said device can be used. A second aspect, non less important, is the fact that because of the particular 'L" like shape of the tie-rod directed against the ear-piece, are avoided those negative slacks, mainly torsion ones, very common in the linear mono-elastic tie rods, diminishing the components wearing. For what concerns the productive aspect, some advantages consist of that the device is completed before being combined with the ear-piece, and therefore, combined as finished to this same with a substantial reduction of manufacturing times and costs.

In conclusion, there will be a considerable functionality-price ratio, making possible the use of the elastic yielding device in a great amount of spectacles, thus widening the base of the possible consumers.

These and other advantages will appear from the following detailed description of preferred embodiments with the aid of the enclosed schematic drawings whose manufacturing details are not to be considered as limitative but only as examples.

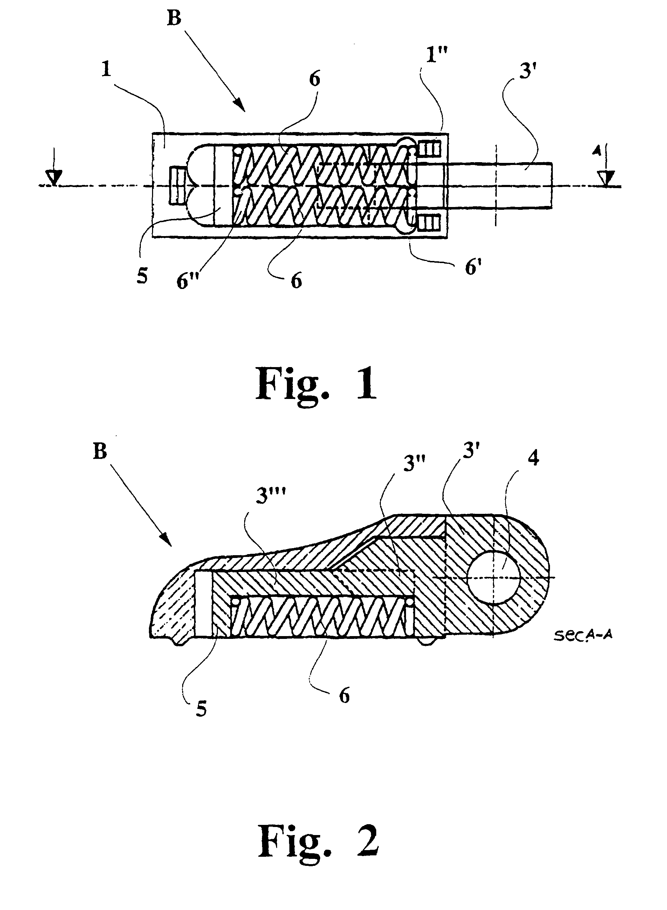

Figure 1, represents a full view and seen from the open side of the small box, of the main part of an elastic yielding device, to be combined with a corresponding tie-rod and ear-piece.

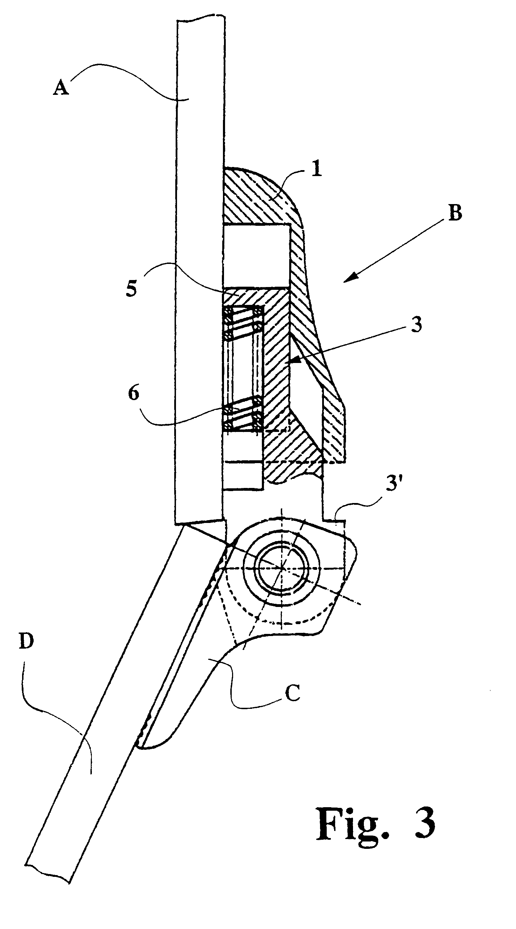

Figure 2., represents a longitudinal section view of the device of Figure 1., seen respectively along the axis A-A.

Figure 3., is a full and partially sectional top view of the device of the previous figures in its operating conditions.

Figures 4. and 5 represent respectively a bottom and side view of the small box, as a part of the elastic yielding device.

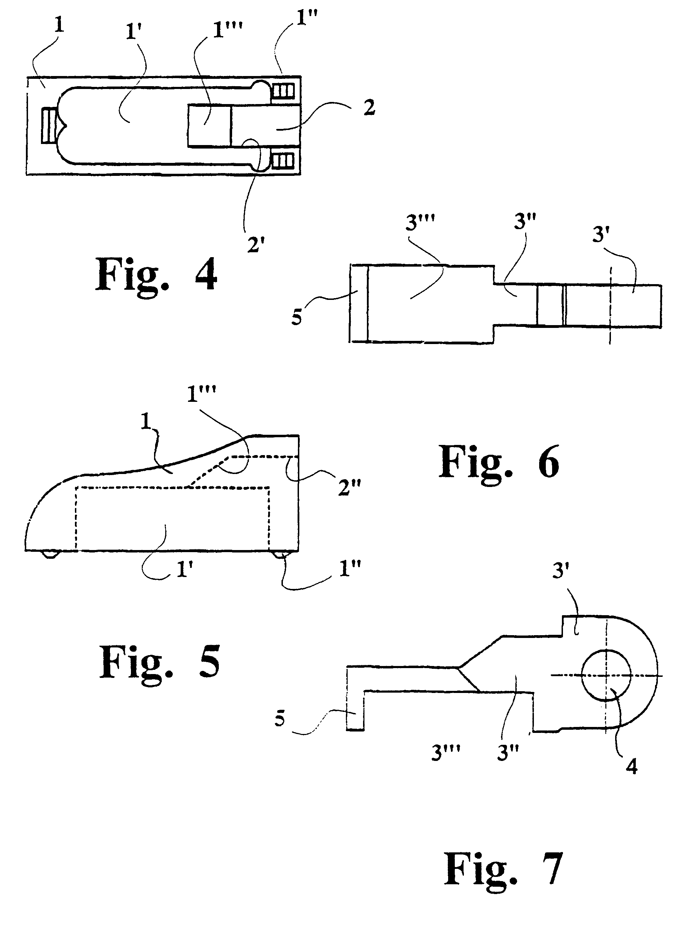

Finally, Figures 6 and 7 represent a view of the two sides of a tie-rod having an end shape of the "L" like type.

Referring to the figures, it can be seen that an ear-piece (A), particularly for spectacles, is elastically yielding for allowing, when these are worn, the opening beyond the common opening axis, generally perpendicular, with respect to the frame (D). More in detail, each metal ear-piece (A) of the spectacles, provides as combined on a flat side, and in correspondence of one end, an elastic yielding device (B), which interacts with a device part (C), called small front face, and engaged in turn on the spectacles frame or front frame (D). The elastic yielding device (B) consists of a small box (1), having rather contained size, open (1.1) on the fixing side on the corresponding ear-piece (A). Along the perimetrical edge of the small box (1), always on the open side ( 1.1), are provided three coplanar abutments of two elastic springs (6), respectively two in the front part (hinging direction -4-) and only one in the back opposite part, the last one being to encase the end of the tooth (5) of a tie-rod hinging means (3). Said abutments or teeth realizing welding protrusions (1.4), in order that, after encasing said tie-rod hinging means (3) and springs (6), a spot welding by electro-welding with the part of the ear-piece (A) is made, allowing the definite and steady fastening of the small box (1), and therefore of the device (B). A second characteristic, always of the small box (1), is that of providing a longitudinal opening as a cutout (2) which concerns its edge in correspondence of the front part, and which realizes two perpendicular abutment faces or walls (1.2) respect to an upper surface (2.2). The purpose of said opening or cutout (2), is that of allowing the axial guide of said tie-rod (3), said tie-rod being in part housed inside of the small box (1), and in part protruding from this latter through a flat surface (3.1) for being hinged to the small front face or hinge portion (C) of the spectacles (D). The flat surface (3.1) of the tie-rod (3) provides the rounded edge and a central hole (4) for the hinging of the group era-piece (A) - device (B), to the small front face (C), while on the opposite side, the portion of tie-rod which protrudes inside of the device (B) includes a flat surface (3.3) turned of 90° respect to the front part (3.1), which is followed by an end section or wing (5) perpendicularly folded respect to the flat surface (3.3). This therefore recalls a typical "L" like shape. An intermediate part of the tie-rod (3) consists of the portion (3.2), which provides an oblique section which, together with the sloping surface (1.3) of the small box (1) the end-stroke of the tie-rod (3).

Substantially the portion (3.2) , is a positive copy of the shape of the guide seat (2) obtained in the small box (1), allowing in a non-operating condition, to keep the springs slightly operating, thus avoiding any slack mainly of the tie-rod (3). In phase of assembling, it is thus possible to insert into the small box (1), first the tie-rod (3) and then the springs (6), or also both of these latter together, which by forcing slightly into the housing will result pre-charged.

The wing (5) is obtained monolithically from the tie-rod (3), allowing to define a lateral housing, inside of which, in contact with the side (3.3) is housed a couple of helicoidal springs (6) parallel and adjacent.

Even more in detail, both springs means (6) are placed with one end (6') in abutment on the bottom of the front part of the small box (1), while with the opposite end (6.2) are in abutment on the corresponding wing (5). By exerting an axial traction of the tie-rod (3), condition which is like the opening beyond the usual opening angle of the ear-piece (A), is obtained a compression of both wings (6), which in this way contrast its action. As a consequence, the ear-piece (A) hinged to a corresponding front face (C) will yield elastically, respect to the front of the frame (D), pulling the tie-rod (3) and contemporaneously compressing the springs (6), internally pushed towards the shoulder of the front part of the small box (1).

Thus, the natural extension of the springs (6), allows to the spectacles, first to be properly and softly worn by modulating the pressure exerted by the ear-pieces on the temples, and then, when no more used, the return to a static condition.

## Claims

1. An ear-piece with elastic hinging device for spectacles comprising a box (1) inside of which at least two springs (6) are housed, said spring means (6) on the hinging side being with their end retained by said box (1) and on the opposite side being abutted against a "L" shaped toothed-end of a tie-rod hinging means (5-3) **characterized in that**:
- said box (1) is welded with the ear-piece (A) in order to realize a full operative pre-assembly box (B) with the ear-piece (A) inside of which:
- the respective "L" shaped toothed-end of said tie-rod hinging means (5-3) is placed with its opening against said ear-piece surface (A) in order that said springs (6) are encased and guided inside said "L" shaped toothed-end tie-rod hinging means (5-3) and said surface of said ear-piece (A);
- said box (1) in its hinging side wall comprises a guide seat (2) and at both sides thereof abutment faces (1,2) each being arranged for abutment of a respective one of said springs (6) to guide and allow sliding between them said L-shaped toothed-end tie-rod hinging means (5-3) of said tie-rod hinging means (3).

2. An ear-piece, according to claim 1 **characterized in that** the said spring means (6) in respect to the said tie-rod hinging means (3) are two and placed adjacent and parallel one to the other and said "L" shaped toothed-end (5) push against both said springs (6) on one side and said abutment faces (1,2) form a two 90° fork-shape teeth (1.2) of said box (1) push one spring on one side and one spring on the other side of the extensions (3.2) regarding said "L" shaped toothed-end tie-rod hinging means (5-3) of said tie-rod hinging means (3).

3. An ear piece according to preceding claims **characterized in that** said hinging device (3) consists of:
- a front hinging part (4) for the hinging of the entire ear-piece (A-B), to hinging portion (C) of the front frame (D);
- an intermediate part consisting of an intermediate portion (3.2) which slides between said abutment faces (1.2) of said box (1) having on its back inside said box (1) an oblique section which is the end-stroke of the tie-rod hinging means (3) together with a sloping surface (1.3) of said box (1);
- a back part which protrudes inside said box (1-B) and comprising a straight surface (3.3) which is followed by an end section (5) perpendicularly folded respect to said surface (3.3) in the ear-piece direction (A) and to realise said L-shaped toothed-end
and wherein said "L" shaped toothed-end of said tie-rod hinging means (5-3) realizes a "C" shape encasing said springs (6) and opened against a sliding surface of said ear-piece (A) to which is welded said box (1-B) substantially by three point electro-welding protrusions (1.4).

4. Spectacles having a front frame and ear pieces with elastic hinging devices according to any of claims 1-3 to connect the ear-piece to the spectacle front frame.

## Patentansprüche

1. Ohrbügel mit elastischer Aufhängevorrichtung für Brille mit einem Kasten (1), in dem mindestens zwei Federn (6) untergebracht sind, deren Ende auf der Aufhängseite durch besagten Kasten festgehalten wird (1), und die auf der gegenüberliegenden Seite an ein "L"-förmiges gezähntes Ende eines Zugstangen-Aufhängmittels (5-3) anstoßen, **gekennzeichnet dadurch, dass**:
- besagter Kasten (1) mit dem Ohrbügel (A) verschweißt ist, um einen voll wirksamen Vormontagekasten (B) mit dem Ohrbügel (A) zu bilden, bei dem:
- das betreffende "L"-förmige gezähnte Ende von besagter Zugstange (5-3) seine Öffnung besagter Ohrbügeloberfläche (A) zuwendet, so dass die Federn (6) ummantelt sind und in besagtem Zugstangen-Aufhängmittel mit "L"-förmigem gezähnten Ende (5-3) und besagter Oberfläche von besagtem Ohrbügel (A) geführt werden;
- besagter Kasten (1) umfasst in seiner Aufhäng-Seitenwand eine Führungsaufnahme (2) und auf beiden Seiten davon Anschlagsseiten (1,2), jede zum Anschlag einer der besagten Federn (6) zwecks Führung und Gleitens zwischen ihnen des besagten L-förmigen gezähnten Endes (5-3) des besagten Zugstangen- Aufhängmittels (3).

2. Ohrbügel nach Anspruch 1, **gekennzeichnet dadurch, dass** die besagten Federn (6) in bezug auf das besagte Zugstangen-Aufhängmittel (3) zwei sind und plaziert angrenzend und parallel zueinander und dass besagtes "*L*"-förmiges gezähnte Ende (5) auf einer Seite gegen die besagten Federn (6) schiebt und dass die besagten Anschlagsseiten (1,2) zwei Zähne in Form einer 90°-Gabel (1.2) von besagtem Kasten (1) bilden und eine Feder auf einer Seite und die andere Feder auf der anderen Seite der Ausdehnungen (3.2) des betreffenden "L"-förmigen gezähnten Endes (5-3) von besagten Zugstangen- Aufhängmittel (3) schieben.

3. Ohrbügel nach den vorherigen Ansprüchen, **gekennzeichnet dadurch, dass** besagte Aufhängvorrichtung (3) besteht aus:
- einem vorderen Aufhängteil (4) zum Aufhängen des ganzen Ohrbügels (*A-B*) am Aufhängteil (C) des Vorderrahmens (D);
- einem Mittelteil, bestehend aus einem Mittelteilstück (3.2), das zwischen besagten Anschlagsseiten (1.2) des Kastens (1) gleitet und auf seiner Rückseite in besagtem Kasten (1) einen schrägen Abschnitt aufweist, der der Endhub des Zugstangen- Aufhängmittels (3) ist, zusammen mit einer schrägen Oberfläche (1.3) des besagten Kastens (1);
- einer Rückseite, die in den Kasten (1-B) ragt und eine gerade Oberfläche (3.3) aufweist, worauf ein Endabschnitt (5) folgt, der senkrecht abgeknickt ist in bezug auf besagte Oberfläche (3.3) i n Richtung Ohrbügel (A) und um besagtes L-förmige gezähnte Ende zu bilden,
und wobei besagtes "L" förmige gezähnte Ende von besagter Zugstange (5-3) ein C bildet, das besagte Feder (6) umschließt und zu einer Gleitoberfläche von besagtem Ohrbügel (A) hin offen ist, an den der Kasten (1-B) geschweißt ist, im wesentlichen durch drei Punkt-Elektroschweißvorsprünge (1.4).

4. Brille mit einen Vorderrahmen und Ohrbügeln mit elastischen Aufhängvorrichtungen nach einem beliebigen der Ansprüche 1-3, um den Ohrbügel mit dem Brillenvorderrahmen zu verbinden.

## Revendications

1. Pièce à oreille avec dispositif d'articulation élastique pour lunettes comprenant une boîte (1) dans laquelle du moins deux ressorts (6) sont logés, ledit moyen de ressort (6) situé sur le côté d'articulation étant retenu à son extrémité par ladite boîte (1) et du côté opposé étant buté contre une extrémité dentée en "L" d'un moyen d'articulation d'une tige d'attache (5-3) **caractérisé en ce que**:
- ladite boîte (1) est soudée à la pièce à oreille (A) afin de réaliser une boîte préalablement assemblée complètement opérationnelle (B) avec la pièce à oreille (A) dans laquelle:
- l'extrémité dentée en forme de "L" dudit moyen d'articulation de tige d'attache (5-3) est placée avec son ouverture regardant vers ladite surface de pièce à oreille (A) afin que lesdits ressorts (6) soient emboîtés et guidés dans ledit moyen d'articulation de tige d'attache d'extrémité dentée en "L" (5-3) et ladite surface de ladite pièce à oreille (A);
- ladite boîte (1) comprend dans sa paroi d'articulation un siège de guidage (2) et deux faces d'ancrage sur chaque côté (1,2), chacune d'entre elles étant disposée pour l'ancrage d'un desdits ressorts (6) afin de guider et de permettre le glissement entre ceux-ci dudit moyen d'articulation de tige d'attache d'extrémité dentée en L (5-3) dudit moyen d'articulation de tige d'attache (3).

2. Pièce à oreille, selon la revendication 1 **caractérisée en ce que** ledit moyen de ressort (6) par rapport audit moyen d'articulation de tige d'attache (3) est composé par deux ressorts placés de forme adjacente et parallèle l'un par rapport à l'autre et où ladite extrémité dentée en "L" (5) exerce une pression contre lesdits deux ressorts (6) d'un côté, et lesdites faces d'ancrage (1,2) forment deux dents en forme de fourchette ayant un angle de 90° (1.2) dans ladite boîte (1) poussant un ressort d'un côté et l'autre ressort du côté des extensions (3.2) en relation avec ledit moyen d'articulation de tige d'attache d'extrémité dentée en "L" (5-3) dudit moyen d'articulation de tige d'attache (3).

3. Pièce à oreille selon les revendications précédentes **caractérisée en ce que** ledit dispositif d'articulation (3) est composé par:
- une partie d'articulation frontale (4) pour l'articulation de la pièce à oreille entière (A-B), jusqu'à la partie d'articulation (C) de la structure frontale (D);
- une partie intermédiaire composée par une portion intermédiaire (3.2) laquelle glisse entre lesdites faces d'ancrage (1.2) de ladite boîte (1) ayant à son intérieur postérieur (1) une section oblique constituant la surface finale du moyen d'articulation de la tige d'attache (3) ainsi qu'une surface inclinée (1.3) de ladite boîte (1);
- une partie postérieure qui surgit dans ladite boîte (1-B) comprenant une surface droite (3.3) suivie par une section finale (5) perpendiculairement pliée en relation avec ladite surface (3.3) suivant la direction de la pièce à oreille (A) pour former ladite extrémité dentée en L dans laquelle, ladite extrémité dentée en "L" dudit moyen d'articulation de tige d'attache (5-3) créée une forme en "C" emboîtant lesdits ressorts (6) étant ouverte contre u n e surface coulissante de ladite pièce à oreille (A) à laquelle est soudée p a r électro -soudage ladite boîte (1-B) substantiellement par trois points de saillie (1.4).

4. Lunettes ayant une structure frontale et pièces à oreille avec des dispositifs d'articulation élastiques selon l'une quelconque des revendications de 1 à 3 pour connecter la pièce à oreille à la structure frontale de la lunette.
